(19) Europäisches Patentamt
European Patent Office
Office européen des brevets

(11) **EP 3 406 579 A1**

(12) **EUROPEAN PATENT APPLICATION**
published in accordance with Art. 153(4) EPC

(43) Date of publication:
**28.11.2018 Bulletin 2018/48**

(51) Int Cl.:
***C03C 17/23*** (2006.01)

(21) Application number: **16886469.2**

(86) International application number:
**PCT/JP2016/085231**

(22) Date of filing: **28.11.2016**

(87) International publication number:
**WO 2017/126230 (27.07.2017 Gazette 2017/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.01.2016 JP 2016009191**

(71) Applicant: AGC INC.
**Chiyoda-ku,**
**Tokyo 1008405 (JP)**

(72) Inventors:
• **MORI, Kazutomo**
**Tokyo 100-8405 (JP)**
• **IKEDA, Toru**
**Tokyo 100-8405 (JP)**
• **TAKEDA, Yosuke**
**Tokyo 100-8405 (JP)**
• **KUWAHARA, Yuichi**
**Tokyo 100-8405 (JP)**

(74) Representative: **Müller-Boré & Partner**
**Patentanwälte PartG mbB**
**Friedenheimer Brücke 21**
**80639 München (DE)**

(54) **TRANSPARENT SUBSTRATE WITH NON-TRANSPARENT FILM**

(57)     A transparent substrate with non-transparent film includes a transparent substrate; and a non-transparent film formed on the transparent substrate.

The non-transparent film includes first projections, each having a diameter of greater than 10 $\mu$m, in a cross section, at a height of 0.05 $\mu$m plus a bearing height of a surface shape obtained by measuring a region of (101-111 $\mu$m) $\times$ (135-148 $\mu$m); and second projections, each having a diameter of 1-10 $\mu$m or less, in a cross section, at a height of 0.5 $\mu$m plus the bearing height of the surface shape.

A maximum height of each of the first projections, with reference to a height at a lowest part in the region, is 8.0-30.0 $\mu$m.

A number of the second projections is 0.001-0.05 per 1 $\mu$m$^2$, and an average height of the second projections, with reference to the bearing height, is 1.50-5.00 $\mu$m.

FIG.2

**Description**

## BACKGROUND OF THE INVENTION

1. Field of the Invention

The disclosure herein generally relates to a transparent substrate with a non-transparent film.

2. Description of the Related Art

Opaque glasses are obtained by performing processes for transparent glasses so that light can penetrate the glasses but it is impossible to see through the glasses. The opaque glasses are used for windows of houses or buildings, for shops, or the like, according to a function of shielding visual lines or decorative effects.

The processes of making transparent glasses for a non-see through state include mechanical processes by sandblasting or the like and chemical processes by etchings (See Patent Document 1, for example).

However, as described in Patent Document 1, when the non-see through process by etching is performed, there is a problem that yellowing occurs in a substrate, or due to fine flaws on a surface of the substrate occurring in a manufacturing process, a strength cannot be enhanced even if an air cooling strengthening is performed.

Yellowing means a phenomenon that when a substrate (glass) is under a moist condition, an alkaline component in the glass is transferred to water absorbed on a glass surface, the alkaline component reacts with an acid gas such as carbon dioxide gas ($CO_2$) or sulfite gas ($SOx$), and thereby the glass surface becomes cloudy.

Moreover, the processes include a method of performing coating to achieve a high haze (See Patent document 2, for example). Patent Document 2 discloses making a coating material by dispersing porous pigments with a particle size of 1 to 5 $\mu$m into a solution dissolved in a solvent of 0.5 or more pts. mass per 1 pts. mass of a resin binder, applying the coating material on a surface of a base body, drying the surface, and thereby forming numerous voids in the part where the coating material was applied, when the solvent is evaporated, forming a layer with a thickness of 1.5 to 3 times the particle size of the porous pigment, and thereby achieving the high haze coating.

However, as disclosed in Patent Document 2, there is a problem that when the air cooling strengthening is performed for the substrate in which the high haze is achieved by coating, the surface of the substrate is heated up to a temperature near a softening point of glass (e.g. 600 to 700 °C), and the resin binder leaks, the coating may be exfoliated, and the high haze cannot be achieved.

[Citation List]

[Patent Literature]

[PTL 1] Japanese Unexamined Patent Application Publication No. 2012-166994
[PTL 2] Japanese Unexamined Patent Application Publication No. Hei 10-130537

## SUMMARY OF THE INVENTION

[Technical Problem]

The present aims at providing a transparent substrate with a non-transparent film with a high haze, in which yellowing does not occur and the substrate can be strengthened.

[Solution to Problem]

The present invention includes following modes.

[1] A transparent substrate with non-transparent film including a transparent substrate; and a non-transparent film formed on the transparent substrate,

the non-transparent film including first projections, each having a diameter (as calculated as an exact circle) of greater than 10 $\mu$m, in a cross section, at a height of 0.05 $\mu$m plus a bearing height of a surface shape obtained by measuring a region of (101 $\mu$m to 111 $\mu$m) $\times$ (135 $\mu$m to 148 $\mu$m) by using a laser microscope; and second projections, each having a diameter (as calculated as an exact circle) of 1 $\mu$m or more and 10 $\mu$m or less, in a cross section, at a height of 0.5 $\mu$m plus the bearing height of the surface shape,

a maximum height of each of the first projections, with reference to a height at a lowest part in the region, being 8.0 $\mu$m or more and 30.0 $\mu$m or less, and

a number of the second projections being 0.001 or more and 0.05 or less per 1 $\mu$m², and an average height of the second projections, with reference to the bearing height, being 1.50 $\mu$m or more and 5.00 $\mu$m or less.

[2] The transparent substrate with non-transparent film described in the item [1], in which a clarity is 0.25 or less.

[3] The transparent substrate with non-transparent film described in the item [1] or [2], in which a haze is 70% or more.

[4] The transparent substrate with non-transparent film described in any of the items [1] to [3], in which the non-transparent film includes silica in an amount of 90 wt% or more.

[5] The transparent substrate with non-transparent film described in any of the items [1] to [4], in which a standard deviation of the maximum heights of the first projections is 10 $\mu$m or less.

[6] The transparent substrate with non-transparent film described in the item [5], in which a sum of areas of the cross sections of the first projections at the height of 0.05 $\mu$m plus the bearing height is 65% of an area of the region or less.

[7] The transparent substrate with non-transparent film described in the item [5] or [6], in which a number of the first projections is 0.00030 or more and 0.76 or less per 1 $\mu$m².

[Effect of Invention]

According to an aspect of the present invention, a transparent substrate with a non-transparent film with a high haze, in which yellowing does not occur and the substrate can be strengthened, is provided.

## BRIEF DESCRIPTION OF THE DRAWINGS

[FIGURE 1] FIG. 1 is a cross-sectional view schematically depicting an embodiment of a transparent substrate with a non-transparent film according to the present invention.

[FIGURE 2] FIG. 2 is a cross-sectional view schematically describing a bearing height plus a 0.05 $\mu$m height in a surface shape of a film in the transparent substrate with the non-transparent film, illustrated in FIG. 1.

[FIGURE 3] FIG. 3 is a cross-sectional view schematically describing a bearing height plus a 0.5 $\mu$m height in a surface shape of a film in the transparent substrate with the non-transparent film, illustrated in FIG. 1.

[FIGURE 4] FIG. 4 is a schematic view depicting an example of an electrostatic painting apparatus.

[FIGURE 5] FIG. 5 is a cross-sectional view schematically depicting an electrostatic painting gun, with which the electrostatic painting apparatus, illustrated in FIG. 4, is provided.

[FIGURE 6] FIG. 6 is a front view depicting the electrostatic painting gun illustrated in FIG. 5 viewed from the front.

[FIGURE 7] FIG. 7 is an explanatory diagram for explaining a visual evaluation that is an index of a non-see through property.

## DETAILED DESCRIPTION OF THE PREFERRED EMBODIMENTS

The following definitions of terms will be applied over the specification of the present invention and claims.

A "bearing height" is a most dominant height (z-value) in a height distribution histogram derived from xyz data of surface shapes obtained by measuring using a laser microscope. The height z in the xyz data is a height with reference to the lowest point of a surface of the transparent substrate with the non-transparent film (surface on which the film is arranged), i.e. a distance from a position for measuring the height z to a plane that is parallel to the surface of the transparent substrate and includes the lowest point. The same applies to a height in a surface shape in the case of not defining a reference in particular. A number of steps (bins) of the histogram when the bearing height is calculated were set to 1000.

An observation area is within a range of (101 $\mu$m to 111 $\mu$m) $\times$ (135 $\mu$m to 148 $\mu$m). That is, the observation area is 101 $\mu$m $\times$ 135 $\mu$m at the minimum and 111 $\mu$m $\times$ 148 $\mu$m at the maximum. Moreover, a ratio of longitudinal to transverse (length of longer side to length of shorter side) typically falls within a range from about 1.21 to 1.46.

The reason why the aforementioned observation area was described with the ranges is that even if objective lenses of the same magnification are used, the observation areas will be different due to individual differences of the lenses. Because the results of measurement are indicated by a maximum, a minimum, and an average within the observation area, even if the observation areas are slightly different, when selecting an objective lens of the same magnification ($\times$100), the results are almost the same.

"Mainly including silica" means including $SiO_2$ of 90 wt% or more.

A "silica precursor" means a substance with which a matrix including mainly silica can be formed by baking.

A "hydrolysable group bonded to a silicon atom" means a group that can be transformed into an OH-group bonded to the silicon atom by a hydrolytic degradation.

A "scale-like particle" means a particle having a flat shape. A shape of the particle can be observed by using a transmission-type electron microscope (in the following, also denoted as TEM).

An "average particle size" means a particle size at a point of 50% on a cumulative volume distribution curve, where an entire volume in a particle size distribution obtained with reference to a volume is set to 100%, i.e. a cumulative 50% diameter with reference to volume (D50). The particle size distribution can be obtained from a frequency distribution measured by using a laser diffraction/scattering type particle size distribution measuring apparatus, and the cumulative volume distribution curve.

An "aspect ratio" means a ratio of a maximum length of a particle to a thickness of the particle (maximum length/thickness). An average aspect ratio is an average value of aspect ratios of randomly selected 50 particles. The thickness of the particle is measured by an atomic force microscope (in the following, also denoted as AFM), and the maximum length is measured by a TEM.

<<Transparent substrate with non-transparent film>>

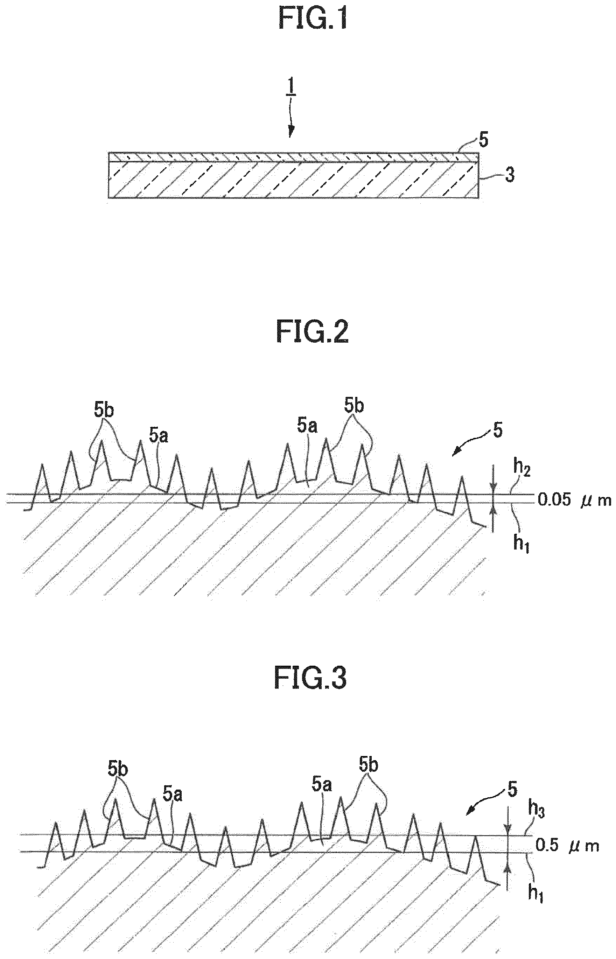

FIG. 1 is a cross-sectional view schematically depicting a first embodiment of the transparent substrate with the non-transparent film according to the present invention.

The transparent substrate with the non-transparent film 1 according to the embodiment is provided with a transparent substrate 3 and a non-transparent film 5 formed on the transparent substrate 3.

(Transparent substrate)

Transparency for the transparent substrate 3 means that 80% or more of a light with a wavelength that falls within a range from 400 nm to 1100 nm goes through the substrate on average.

A material of the transparent substrate 3 includes, for example, a glass or a resin.

The glass includes, for example, a soda lime glass, a borosilicate glass, an aluminosilicate glass, or an alkali-free glass.

The resin includes, for example, a polyethylene terephthalate, a polycarbonate, a triacetylcellulose, or a polymethylmethacrylate.

A form of the transparent substrate 3 includes, for example, a plate or a film.

A shape of the transparent substrate 3 may be not only a flat shape, as illustrated in the drawing, but also a shape with a curved surface.

In the case where the transparent substrate 3 has a curved surface, an entire surface of the transparent substrate 3 may be configured of curved surfaces, or the surface of the transparent substrate 3 may be configured of a curved surface and a flat surface. An example of the case, where the entire surface is configured of curved surfaces, includes a configuration in which a cross section of the transparent substrate has an arch shape.

The transparent substrate 3 is preferably a glass plate.

The glass plate may be a flat and smooth glass plate formed by using a float method, a fusion (overflow down draw) method, a slot down draw method, or the like, or may be a figured glass having irregularities on a surface formed by using a rollout method or the like. Moreover, the glass plate may be not only a flat-shaped glass plate, but also a glass plate with a shape having a curved surface.

For a strengthening process, a process of forming a compressive stress layer on a surface of a glass plate is typically known. The compressive stress layer on the surface of the glass plate enhances the strength of the glass plate against flaw or shock. A representative method of forming the compressive stress layer on the surface of the glass plate includes an air cooling strengthening method (physical strengthening method) and a chemical strengthening method.

In the air cooling strengthening method, a surface of a glass plate, which is heated at around a softening temperature of the glass (e.g. 600 to 700 °C), is rapidly cooled by an airflow or the like. Thus, a temperature difference occurs between the surface and an inside of the glass, and thereby a compressive stress is generated in a surface layer of the glass plate.

In the chemical strengthening method, a glass plate at a temperature, that is a distortion point of a glass or lower, is immersed into a molten salt, and ions (e.g. sodium ions) in a surface layer of the glass plate are exchanged with ions with greater ion radii (e.g. potassium ions). Thus, a compressive stress is generated in the surface layer of the glass plate.

In the case where a thickness of the glass plate is thin (e.g. less than 2 mm), because a temperature difference is unlikely to occur between the inside and the surface layer of the glass plate, and the glass plate cannot be sufficiently strengthened by the air cooling strengthening method, the chemical strengthening method is preferably used.

A glass plate, to which the chemical strengthening method is applied, is not particularly limited, as long as the glass plate has a composition that can be chemically strengthened, various compositions may be used. The composition includes, for example, a soda lime glass, an aluminosilicate glass, a borate glass, a lithium aluminosilicate glass, a borosilicate glass, or other various glasses.

The aforementioned physical strengthening process and the chemical strengthening process for glass may be performed before forming a film on the surface of the glass plate and may be performed after forming the film.

The transparent substrate 3 may have a functional layer on a surface of a main body of the transparent substrate 3.

The main body of the transparent substrate 3 is the same as that listed, as described above, for the transparent substrate 3.

The functional layer includes a coloring layer, a metallic layer, an adhesion improving layer, a protection layer or the like.

(Non-transparent film)

FIG. 2 is a cross-sectional view schematically describing a bearing height plus a 0.05 $\mu$m height in a surface shape of the non-transparent film 5. FIG. 3 is a cross-sectional view schematically describing a bearing height plus a 0.5 $\mu$m height, instead of the bearing height plus the 0.05 $\mu$m height, illustrated in FIG. 2.

The non-transparent film 5 is configured of first projections 5a and second projections 5b.

The first projections 5a are projections, each having a diameter (as calculated as an exact circle) of greater than 10 $\mu$m, in a cross section, at a height $h_2$ of a bearing height $h_1$ of a surface shape obtained by measuring an area of 101 $\mu$m $\times$ 143 $\mu$m by using a laser microscope plus 0.05 $\mu$m. That is, the first projections 5a are projections, for which cross-sectional surfaces are observed in the cross section at the height $h_2$ of the surface shape, and diameters (as calculated as an exact circle) calculated from areas of the cross-sectional surfaces are greater than 10 $\mu$m.

The second projections 5b include projections, each having a diameter (as calculated as an exact circle) of 1 $\mu$m or more and 10 $\mu$m or less, in a cross section, at a height $h_3$ of a bearing height $h_1$ of the surface shape plus 0.5 $\mu$m, and preferably includes projections, each having a diameter of 1 to 20 $\mu$m. That is, the second projections 5b include projections, for which cross-sectional surfaces are observed in the cross section at the height $h_3$ of the surface shape, and diameters (as calculated as an exact circle) calculated from areas of the cross-sectional surfaces are 1 $\mu$m or more and 10 $\mu$m or less.

In the non-transparent film 5, an average diameter (as calculated as an exact circle) of the first projections 5a in the cross section, at the height of the bearing height of the surface shape plus 0.05 $\mu$m, is preferably greater than 10 $\mu$m and less than or equal to 143 $\mu$m, more preferably greater than 10 $\mu$m and less than or equal to 140 $\mu$m, and further preferably greater than or equal to 20 $\mu$m and less than or equal to 135 $\mu$m. When the average diameter of the first projections 5a falls within the aforementioned range, the non-transparent film 5 has a great effect of scattering light and is excellent in non-see through property.

The maximum height of the first projections 5a in the non-transparent film 5 falls within a range of 8.0 to 30.0 $\mu$m, and more preferably falls within a range of 10.0 to 30.0 $\mu$m. When the maximum height of the first projections 5a is greater than or equal to the lower limit of the aforementioned range, the effect of the non-see through property becomes greater. Typically, the higher the maximum height of the first projections 5a is within the range, the more excellent the non-see through property is. The higher the maximum height of the first projections 5a is, the greater an area of a slope of the projections is. Thus, the scattering of light at the surface of the film and at an air interface increases, and the non-see through property is enhanced.

The maximum height is a value with reference to a height of the lowest part within the region. That is, the maximum height is obtained from hp-hv (in the following, referred also to as "P to V"):

$h_v$: a height of a lowest part within a region measured by a laser microscope;
$h_p$: a height of a cross section, at which the diameter of the cross-sectional surface of a projection (as calculated as an exact circle) is no longer observable at 10 $\mu$m or greater when increasing the height of the cross section from a reference plane that is obtained by cutting the surface shape at a plane parallel to a surface of the transparent substrate 3.

In the non-transparent film 5, the average diameter (as calculated as an exact circle) of the second projections 5b in the cross section, at the height of the bearing height of the surface shape plus 0.5 $\mu$m, is obtained by averaging diameters of the second projections that are 1 $\mu$m or more and 10 $\mu$m or less, and the diameters of the second projections that are less than 1 $\mu$m or greater than 10 $\mu$m are not taken into account. However, second projections with diameters of less than 1 $\mu$m or greater than 10 $\mu$m may be present. The average diameter (as calculated as an exact circle) of the second projections 5b in the cross section, at the height of the bearing height of the surface shape plus 0.5 $\mu$m is preferably 1 $\mu$m or more and 10 $\mu$m or less, more preferably 3 $\mu$m or more and 10 $\mu$m or less, and particularly preferably

3 $\mu$m or more and 5 $\mu$m or less. When the average diameter of the second projections 5b falls within the aforementioned range, as a density of the second projections increases, the non-see through property becomes more excellent.

An average height of the second projections 5b in the non-transparent film 5 falls within a range of 1.50 to 5.00 $\mu$m, preferably falls within a range of 2.00 to 5.00 $\mu$m, and particularly preferably falls within a range of 3.00 to 4.10 $\mu$m. When the average height of the second projections 5b is greater than or equal to a lower limit of the aforementioned range, the non-transparent film 5 is excellent in non-see through property, and further has an effect of controlling a glare of an external light. When the average height of the second projections 5b is less than or equal to an upper limit of the aforementioned range, the non-transparent film 5 is excellent in durability such as abrasion resistance.

The average height is a value with reference to the bearing height $h_1$ in the surface shape, and obtained by averaging heights of the second projections with diameters (as calculated as an exact circle) that are 1 $\mu$m or more and 10 $\mu$m or less in the cross section at the height $h_3$ of the surface shape. That is, from among the second projections 5b in the region, for the projections with diameters (as calculated as an exact circle) that are 1 $\mu$m or more and 10 $\mu$m or less, in the cross section, at the height $h_3$ of the surface shape, heights are measured, where the bearing height $h_1$ is set to zero, and averaged.

A number of the second projections 5b in the non-transparent film 5 preferably falls within a range of 0.0010 to 0.0500 per 1 $\mu$m$^2$, and particularly preferably falls within a range of 0.0020 to 0.0500. When the number of the second projections 5b per 1 $\mu$m$^2$, (density of the second projections 5b) is greater than or equal to the lower limit of the range and less than or equal to the upper limit of the range, the non-transparent film is excellent in the non-see through property. When the number is greater within the range, interference between light refracted at the first projections 5a is likely to be blocked, and the effect of enhancing the non-see through property becomes greater.

The number of the second projections 5b per 1 $\mu$m$^2$ is obtained by counting projections with a diameter (as calculated as an exact circle) that are 1 $\mu$m or more and 10 $\mu$m or less, in the cross section, at the height $h_3$ of the surface shape.

The region to be measured by using the laser microscope is randomly selected from a surface of the transparent substrate 1 with non-transparent film on the non-transparent film 5 side.

Diameters (as calculated as an exact circle) of cross-sectional surfaces of projections in a cross section at the bearing height $h_1$, a cross section at the height $h_2$ of the bearing height $h_1$ plus 0.05 $\mu$m, and a cross section at the height $h_3$ of the bearing height $h_1$ plus 0.5 $\mu$m; a maximum height (P to V) of the first projections 5a; an average height of the second projections 5b; and a number of the second projections 5b are obtained by analyzing data of surface shapes measured by using a laser microscope, with an image processing software ("SPIP" by Image Metrology A/S).

Refractive index:

A refractive index of the non-transparent film 5 preferably falls within a range of 1.40 to 1.46, and falls more preferably falls within a range of 1.43 to 1.46. When the refractive index of the non-transparent film 5 is an upper limit of the aforementioned range or less, a reflectance of an external light at a surface of the non-transparent film is reduced, and a glare of an external light is reduced. When the refractive index of the non-transparent film 5 is a lower limit of the aforementioned range or more, a compactness of the non-transparent film 5 is sufficiently high, and the non-transparent film 5 is excellent in adhesiveness to the transparent substrate 3 such as a glass plate.

The refractive index of the non-transparent film 5 can be adjusted by a material of a matrix of the non-transparent film 5, a porosity of the non-transparent film 5, addition of a material having any refractive index into the matrix, or the like. For example, by increasing the porosity of the non-transparent film 5, the refractive index can be reduced. Moreover, by adding a material having a low refractive index (such as solid silica particles, or hollow silica particles) into the matrix, the refractive index of the non-transparent film 5 can be reduced.

A material of the non-transparent film 5 (first projections 5a, second projections 5b, or the like) can be appropriately determined taking into account the refractive index or the like. In the case where the refractive index of the non-transparent film 5 falls within a range from 1.40 to 1.46, the material of the non-transparent film 5 includes silica, titania of the like.

The non-transparent film 5 preferably includes silica as a main component. When the non-transparent film 5 includes silica as a main component, the refractive index (reflectance) of the non-transparent film 5 is likely to be low. Moreover, a chemical stability or the like of the non-transparent film 5 is excellent. Moreover, when a material of the transparent substrate 3 is a glass, an adhesion to the transparent substrate 3 is excellent.

In the case where the main component is silica, the non-transparent film 5 may be configured only of silica, or may include a small amount of a component other than silica. The component includes an ion or a plurality of ions selected from Li, B, C, N, F, Na, Mg, Al, P, S, K, Ca, Ti, V, Cr, Mn, Fe, Co, Ni, Cu, Zn, Ga, Sr, Y, Zr, Nb, Ru, Pd, Ag, In, Sn, Hf, Ta, W, Pt, Au, Bi, and a lanthanoid element, and/or a compound such as an oxide.

The non-transparent film 5 is, for example, formed of a coating composition including at least one of a silica precursor (A) and particles (C); and a liquid medium (B). The coating composition may include a binder (D) other than the silica precursor (A), another additive (E), or the like, as necessary. In the case where the coating composition includes the silica precursor (A), a main component of the matrix of the non-transparent film 5 is silica derived from the silica precursor (A). The non-transparent film 5 may be configured of the particles (C). In this case, the particles (C) are preferably silica particles. In the non-transparent film 5, the particles (C) may be dispersed in the matrix.

A formation method of the non-transparent film 5 using the coating composition will be described later in detail.

A film including silica as a main component includes a film formed of a coating composition including the silica precursor (A); a film formed of a coating composition including silica particles as the particles (C), or the like.

<Advantageous effect>

The transparent substrate with a non-transparent film 1, described as above, has a configuration including first projections 5a and second projections 5b. Light scattered in the first projections 5a is further scattered in the second projections 5b, thereby the non-see through property is enhanced. In the configuration including the first projections 5a and the second projections 5b, the non-see through property is enhanced in accordance with a greater height of the first projections 5a, a greater density of the second projections 5b where the density is $0.0010/\mu m^2$ or more, and a greater average height of the second projections 5b. Even in the case where the height of the first projections 5a is low, when the density and the height of the second projections 5b are great, the non-see through property is enhanced. The non-see through property is determined by the height of the first projections 5a, and the density and height of the second projections 5b.

In the transparent substrate with non-transparent film 1, the first projections 5a are considered to contribute to the non-see through property mainly by scattering a transmitted light.

<Manufacturing method of transparent substrate with non-transparent film>

The transparent substrate with non-transparent film 1 can be manufactured, for example, by a manufacturing method including

a step of preparing a coating composition including at least one of a silica precursor (A) and particles (C), and a liquid medium (B), the liquid medium (B) including a liquid medium (B1) with a boiling point of 150 °C or lower, of 86 wt% or more with respect to a total amount of the liquid medium (B) (in the following, referred also to as a "coating composition preparation step");

a step of charging the coating composition and spraying the coating composition, by using an electrostatic painting apparatus provided with an electrostatic painting gun having a rotary atomizing head, and thereby applying the coating composition on a transparent substrate 3 to form a paint film (in the following, referred also to as an "application step"); and

a step of baking the paint film to form a non-transparent film 5 (in the following, referred also to as a "baking step").

The manufacturing method may include, as necessary, a step of forming a functional layer on a surface of a main body of the transparent substrate, before forming the non-transparent film 5, to prepare the transparent substrate 3. The manufacturing method may include a step of performing a publicly known post process after forming the non-transparent film 5.

[Coating composition preparation step]

The coating composition includes at least one of a silica precursor (A) and particles (C), and a liquid medium (B) .

In the case where the coating composition does not include a silica precursor (A) and includes particles (C), an average particle size of the particles (C) is preferably 600 nm or less.

The coating composition may include, as necessary, within a range not to impair the effects of the present invention, a binder (D) other than the silica precursor (A), another additive (E), or the like.

(Silica precursor (A))

The silica precursor (A) includes a silane compound (A1) having a hydrocarbon group and a hydrolysable group bonded to a silicon atom or its hydrolytic condensate, an alkoxysilane (excluding the silane compound (A1)) or its hydrolytic condensate (sol gel silica), silazane, or the like.

In the silane compound (A1), the hydrocarbon group bonded to a silicon atom may be a monovalent hydrocarbon group bonded to one silicon atom, or may be a bivalent hydrocarbon group bonded to two silicon atoms. The monovalent hydrocarbon group includes an alkyl group, an alkenyl group, an aryl group, or the like. The bivalent hydrocarbon group includes an alkylene group, an alkenylene group, an arylene group, or the like.

The hydrocarbon group may have a group having one group or two or more groups in combination selected from -O-, -S-, -CO- and -NR'- (where R' is a hydrogen atom or a monovalent hydrocarbon group) between carbon atoms.

The hydrolysable group bonded to a silicon atom includes an alkoxy group, an acyloxy group, a ketoxime group, an alkenyloxy group, an amino group, an aminoxy group, an amide group, an isocyanate group or a halogen atom. Among them, in view of the balance between the stability and hydrolyzability of the silane compound (A1), an alkoxy group, an isocyanate group or a halogen atom (particularly a chlorine atom) is preferred.

The alkoxy group is preferably a $C_{1-3}$ alkoxy group, more preferably a methoxy group or an ethoxy group.

In the case where the silane compound (A1) has a plurality of hydrolysable groups, the hydrolysable groups may be the same groups or different groups, and they are preferably the same groups in view of availability.

The silane compound (A1) includes a compound represented by a formula (I), which will be described later, an alkoxysilane having an alkyl group (such as methyltrimethoxysilane or ethyltriethoxysilane), an alkoxysilane having a vinyl group (such as vinyltrimethoxysilane or vinyltriethoxysilane), an alkoxysilane having an epoxy group (such as 2-(3,4-epoxycyclohexyl)ethyltrimethoxysilane, 3-glycidoxypropyltrimethoxysilane, 3-glycidoxypropylmethyldiethoxysilane or 3-glycidoxypropyltriethoxysilane) or an alkoxysilane having an acryloyloxy group (such as 3-acryloyloxypropyltrimethoxysilane).

The silane compound (A1) is preferably a compound represented by the following formula (I), whereby the non-transparent film 5 is less likely to undergo cracking or film peeling even though it is thick.

$$R_{3-p}L_pSi\text{-}Q\text{-}SiL_pR_{3-p} \qquad (I)$$

In the formula (I), Q is a bivalent hydrocarbon group (which may have a group having one group or two or more groups in combination selected from -O-, -S-, -CO- and -NR'- (where R' is a hydrogen atom or a monovalent hydrocarbon group) between carbon atoms). The bivalent hydrocarbon group includes the above-described one.

The bivalent hydrocarbon group Q is preferably a $C_{2-8}$ alkylene group, more preferably a $C_{2-6}$ alkylene group, whereby such a compound is easily available, and the non-transparent film 5 is less likely to undergo cracking or film peeling even though it is thick.

In the formula (I), L is a hydrolysable group. The hydrolysable group includes the above-described one, and the same applies to the preferred embodiment.

The group R is a hydrogen atom or a monovalent hydrocarbon group. The monovalent hydrocarbon includes the above-described one.

In formula (I), p is an integer of from 1 to 3. The integer p is preferably 2 or 3, whereby the reaction rate will not be too low, and is particularly preferably 3.

The alkoxysilane (excluding the silane compound (A1)) includes a tetraalkoxysilane (such as tetramethoxysilane, tetraethoxysilane, tetrapropoxysilane or tetrabutoxysilane), an alkoxysilane having a perfluoropolyether group (such as perfluoropolyether triethoxysilane), an alkoxysilane having a perfluoroalkyl group (such as perfluoroethyltriethoxysilane), or the like.

Hydrolysis and condensation of the silane compound (A1) and the alkoxysilane (excluding the silane compound (A1)) may be carried out by a known method.

For example, in the case of a tetraethoxysilane, hydrolysis and condensation are carried out by using water in an amount of at least 4 molar times of the tetraalkoxysilane, and an acid or alkali as a catalyst.

The acid includes an inorganic acid (such as $HNO_3$, $H_2SO_4$ or HCl) or an organic acid (such as formic acid, oxalic acid, monochloroacetic acid, dichloroacetic acid or trichloroacetic acid). The alkali includes ammonia, sodium hydroxide or potassium hydroxide. The catalyst is preferably an acid in view of long term storage property of the hydrolytic condensate of the silane compound (A).

The silica precursor (A) may be used alone or in combination of two or more.

The silane precursor (A) preferably contains either one or both of the silane compound (A1) and its hydrolytic condensate, with a view to preventing cracking and film peeling of the non-transparent film 5.

The silica precursor (A) preferably contains either one or both of the tetraalkoxysilane and its hydrolytic condensate, from the viewpoint of the abrasion resistance of the non-transparent film 5.

The silica precursor (A) particularly preferably contains either one or both of the silane compound (A1) and its hydrolytic condensate, and either one or both of the tetraalkoxysilane and its hydrolytic condensate.

(Liquid medium (B))

The liquid medium (B) is, in a case where the coating composition contains the silica precursor (A), for dissolving or dispersing the silica precursor (A), and in a case where the coating composition contains the particles (C) for dispersing the particles (C). In a case where the coating composition contains both the silica precursor (A) and the particles (C), the liquid medium (B) may be one having both the function as a solvent or dispersion medium to dissolve or disperse the silica precursor (A) and the function as a dispersion medium to disperse the particles (C).

The liquid medium (B) contains at least a liquid medium (B1) having a boiling point of 150 °C or lower. The boiling point of the liquid medium (B1) is preferably from 50 to 145 °C, more preferably from 55 to 140 °C.

When the boiling point of the liquid medium (B1) is 150 °C or lower, a film will have antiglare performance, which is obtained by applying the coating composition to the transparent substrate 3 by using an electrostatic coating apparatus equipped with an electrostatic coating gun having a rotary atomizing head, followed by baking. When the boiling point of the liquid medium (B1) is the lower limit of the above range or higher, the irregular structure can be formed while the shape of droplets of the coating composition attached to the transparent substrate 3 is sufficiently maintained.

The liquid medium (B1) includes water, an alcohol (such as methanol, ethanol, isopropyl alcohol, n-butyl alcohol, isobutyl alcohol or 1-pentanol), a ketone (such as acetone, methyl ethyl ketone or methyl isobutyl ketone), an ether (such as tetrahydrofuran or 1,4-dioxane), a cellosolve (such as methyl cellosolve or ethyl cellosolve), an ester (such as methyl acetate or ethyl acetate) or a glycol ether (such as ethylene glycol monomethyl ether or ethylene glycol monoethyl ether), or the like.

The liquid medium (B1) may be used alone or in combination of two or more.

The liquid medium (B) may further contain, as necessary, a liquid medium other than the liquid medium (B1), that is, a liquid medium having a boiling point of higher than 150 °C.

Such another liquid medium includes, for example, an alcohol, a ketone, an ether, a cellosolve, an ester, a glycol ether, a nitrogen-containing compound or a sulfur-containing compound.

The alcohol includes diacetone alcohol, 1-hexanol or ethylene glycol, or the like.

The nitrogen-containing compound includes N,N-dimethylacetamide, N,N-dimethylformamide or N-methylpyrrolidone, or the like.

The glycol ether includes ethylene glycol monobutyl ether, or the like.

The sulfur-containing compound includes dimethyl sulfoxide of the like.

Another liquid medium may be used alone or in combination of two or more.

Because water is required for hydrolysis of the alkoxysilane or the like as the silica precursor (A), the liquid medium (B) contains at least water as the liquid medium (B1) unless the liquid medium is replaced after hydrolysis.

In such a case, the liquid medium (B) may be water alone or may be a mixture of water and another liquid. Such another liquid may be the liquid medium (B1) other than water or may be another liquid medium, and includes, for example, an alcohol, a ketone, an ether, a cellosolve, an ester, a glycol ether, a nitrogen-containing compound or a sulfur-containing compound. Among them, as the solvent of the silica precursor (A), an alcohol is preferred, and methanol, ethanol, isopropyl alcohol or butanol is particularly preferred.

(Particles (C))

The particles (C) constitute a film solely or together with the matrix derived from the silica precursor (A) .

In a case where the coating composition contains no silica precursor (A) and contains the particles (C), the average particle size of the particles (C) is preferably 600 nm or less.

The particles (C) include flake-shaped particles (C1), other particles (C2) other than the flake-shaped particles (C1), or the like.

Flake-shaped particles (C1):

An average aspect ratio between the "thickness" and the "particle size in a direction orthogonal to the thickness direction" of the flake-shaped particles (C1) is preferably from 50 to 650, more preferably from 60 to 350, further preferably from 65 to 240. When the average aspect ratio of the flake-shaped particles (C1) is 50 or more, cracking and film peeling of the film can be sufficiently suppressed even though the antiglare film is thick. When the average aspect ratio of the flake-shaped particles (C1) is 650 or less, such particles have favorable dispersion stability in the coating composition.

The average particle size of the flake-shaped particles (C1) is preferably from 0.08 to 0.60 $\mu$m, more preferably from 0.17 to 0.55 $\mu$m. When the average particle size of the flake-shaped particles (C1) is 0.08 $\mu$m or more, cracking and film peeling of the film can be sufficiently suppressed even if the film is thick. When the average particle size of the flake-shaped particles (C1) is 0.60 $\mu$m or less, such particles have favorable dispersion stability in the coating composition.

The flake-shaped particles (C1) include flake-shaped silica particles, flake-shaped alumina particles, flake-shaped titania particles, flake-shaped Zirconia particles, or the like. The flake-shaped particles (C1) are preferably flake-shaped silica particles with a view to suppressing an increase of the refractive index of the film and lowering the reflectance.

The flake-shaped silica particles are flake-like silica primary particles, or silica secondary particles having a plurality of flake-shaped silica primary particles aligned and overlaid with their planes in parallel with each other. Typically, the silica secondary particles are particle configurations having a laminated structure.

The flake-shaped silica particles may refer to either one of the silica primary particles and the silica secondary particles, or both.

The thickness of the silica primary particles is preferably from 0.001 to 0.1 $\mu$m. When the thickness of the silica primary particles falls within the above range, flake-shaped silica secondary particles having one or a plurality of the silica primary particles aligned with their planes in parallel with each other can be formed.

The thickness of the silica secondary particles is preferably from 0.001 to 3 $\mu$m, more preferably from 0.005 to 2 $\mu$m.

The silica secondary particles are preferably independently present without fusion.

The $SiO_2$ purity of the flake-shaped silica particles is preferably 95.0 mass% or more, and more preferably 99.0 mass% or more.

To prepare the coating composition, a powder which is agglomerates of a plurality of the flake-shaped silica particles or a dispersion having the powder dispersed in a liquid medium is used. The silica concentration in the dispersion is preferably from 1 to 80 mass%.

The powder or the dispersion may contain not only the flake-shaped silica particles but also irregular silica particles which form at the time of producing the flake-shaped silica particles. The flake-shaped silica particles are obtained, for example, by disintegrating and dispersing silica tertiary particles (hereinafter sometimes referred to as silica agglomerates) in the form of agglomerates having gaps formed by the flake-shaped silica particles agglomerated and irregularly overlaid. The irregular silica particles are in a state such that silica agglomerates can form into smaller particle groups to a certain extent but not into individual flake-shaped silica particles, and a plurality of flake-shaped silica particles form agglomerates. If irregular silica particles are contained, the compactness of the non-transparent film to be formed may be decreased, whereby cracking or film peeling is likely to occur. Accordingly, the content of the irregular silica particles in the powder or the dispersion is preferably as low as possible.

The irregular silica particles and the silica agglomerates appear black by observation with a TEM. In contrast, the flake-shaped silica primary particles or silica secondary particles appear as thin black shapes or semitransparent by observation with a TEM.

As the flake-shaped silica particles, a commercially available product may be used, or particles produced may be used.

The flake-shaped silica particles are preferably produced by the manufacturing method as disclosed in Japanese unexamined patent application publication No. 2014-94845. The manufacturing method includes a step of subjecting a silica powder containing silica agglomerates having flake-shaped silica particles agglomerated, to acid treatment at a pH of 2 or less, a step of subjecting the silica powder subjected to the acid treatment, to alkali treatment at a pH of 8 or more to deflocculate the silica agglomerates, and a step of wet disintegrating the silica powder subjected to the alkali treatment to obtain flake-shaped silica particles. According to the manufacturing method, formation of irregular silica particles in the manufacturing method can be suppressed, and a powder or dispersion having a low content of irregular silica particles can be obtained as compared with a known manufacturing method (for example, the method as disclosed in Japanese Patent No. 4063464).

Particles (C2):

Particles (C2) other than the flake-shaped particles (C1) include metal oxide particles, metal particles, pigment particles, resin particles, or the like.

A material of the metal oxide particles includes $Al_2O_3$, $SiO_2$, $SnO_2$, $TiO_2$, $ZrO_2$, $ZnO$, $CeO_2$, Sb-containing $SnQ_x$ (ATO), Sn-containing $In_2O_3$ (ITO), $RuO_2$, or the like. Among them, $SiO_2$ is preferable, because the refractive index of $SiO_2$ is the same as that of the matrix.

A material of the metal particles includes a metal (such as Ag or Ru), an alloy (such as AgPd or RuAu), or the like.

A material of the pigment particles includes an inorganic pigment (such as titanium black or carbon black), an organic pigment, or the like.

The material of the resin particles includes an acrylic resin, a polystyrene, a melamine resin, or the like.

The shape of the particles (C2) includes spheres, ellipses, needles, plates, rods, cones, columns, cubes, cuboids, diamonds, stars, irregular particles, or the like. Such other particles may be present in a state where the respective particles are independent of one another, the particles are connected in a chain, or the particles are agglomerated.

The particles (C2) may be solid particles, may be hollow particles or may be perforated particles such as porous particles.

The particles (C2) are preferably silica particles (excluding the flake-shaped silica particles) such as spherical silica particles, rod silica particles or needle silica particles. Among them, the particles are preferably spherical silica particles on the point a sufficiently high haze of the transparent substrate with non-transparent film 1, and are more preferably porous spherical silica particles.

The average particle size of the particles (C2) is preferably from 0.03 to 2 $\mu$m, and more preferably from 0.05 to 1.5 $\mu$m. When the average particle size of the particles (C2) is 2 $\mu$m or less, the particles have favorable dispersion stability in the coating composition.

The BET specific surface area of the porous spherical silica particles is preferably from 200 to 300 $m^2/g$.

The pore volume of the porous spherical silica particles is preferably from 0.5 to 1.5 $cm^3/g$.

As a commercially available product of the porous spherical silica particles, LIGHTSTAR (registered trademark) series manufactured by Nissan Chemical Industries, Ltd. may be mentioned.

The particles (C) may be used alone or in combination of two or more.

The particles (C) preferably contain the flake-shaped particles (C1) and may further contain the particles (C2). By the particles (C) containing the flake-shaped particles (C1), the haze of the non-transparent film 5 is increased, and a more excellent non-see through performance will be obtained. Moreover, in a case where the flake-shaped particles (C1) are contained, as compared with the particles (C2), cracking or film peeling is less likely to occur when the non-transparent film 5 is made thick.

(Binder (D))

The binder (D) (excluding the silica precursor (A)) includes an inorganic substance or a resin which can be dissolved or dispersed in the liquid medium (B).

The inorganic substance includes, for example, a metal oxide precursor (metal: titanium, zirconium or the like) other than silica.

The resin includes a thermoplastic resin, a thermosetting resin, an ultraviolet curable resin, or the like.

(Additive (E))

The additive (E) includes, for example, an organic compound (E1) having a polar group, an ultraviolet absorber, an infrared reflecting agent/an infrared absorber, an anti-reflecting agent, a surfactant for enhancing levelling properties, or a metal compound for enhancing durability.

In a case where the coating composition contains the particles (C), by incorporating the organic compound (E1) having a polar group into the coating composition, agglomeration of the particles (C) by electrostatic force in the coating composition can be suppressed.

The organic compound (E1) having a polar group preferably has, in view of an effect to suppress agglomeration of the particles (C), a hydroxy group and/or a carbonyl group in its molecule, more preferably has at least one member selected from the group consisting of a hydroxy group, an aldehyde group (-CHO), a ketone group (-C(=O)-), an ester bond (-C(=O)O-) or a carboxyl group (-COOH) in its molecule, further preferably has at least one member selected from the group consisting of a carboxyl group, a hydroxy group, an aldehyde group and a ketone group in its molecule.

The organic compound (E1) having a polar group includes an unsaturated carboxylic acid polymer, a cellulose derivative, an organic acid (excluding an unsaturated carboxylic acid polymer), a terpene compound, or the like. The organic compound (E1) may be used alone or in combination of two or more.

As the unsaturated carboxylic acid polymer, polyacrylic acid may be mentioned.

As the cellulose derivative, polyhydroxyalkyl cellulose may be mentioned.

The organic acid (excluding the unsaturated carboxylic acid polymer) includes formic acid, oxalic acid, monochloroacetic acid, dichloroacetic acid, trichloroacetic acid, citric acid, tartaric acid, maleic acid, or the like.

Note that in a case where an organic acid is used as the catalyst for hydrolysis of the alkoxysilane or the like, the aforementioned organic acid is included in the organic acid as the organic compound (E1).

Terpene means a hydrocarbon having a composition (CsHs)n (where n is an integer greater than or equal to 1) having isoprene ($C_5H_8$) as constituting units. A terpene compound means a terpene having a functional group derived from terpene. The terpene compound includes ones differing in the degree of unsaturation.

Note that some terpene compounds function as a liquid medium, however, ones which are "hydrocarbon having a composition of $(C_5H_8)_n$ comprising isoprene as constituting units" are considered to correspond to the terpene derivative but not to the liquid medium.

The terpene derivative includes a terpene alcohol (such as $\alpha$-terpineol, terpine-4-ol, L-menthol, ($\pm$) citronellol, myrtenol, borneol, nerol, farnesol or phytol), a terpene aldehyde (such as citral, $\beta$-cyclocitral or perillaldehyde), a terpene ketone (such as ($\pm$) camphor or $\beta$-ionone), a terpene carboxylic acid (such as citronellic acid or abietic acid), a terpene ester (such as terpinyl acetate or menthyl acetate), or the like.

The surfactant for enhancing the levelling property includes a silicone oil-based surfactant, an acrylic-based surfactant, or the like.

The metal compound for enhancing the durability is preferably a zirconium chelate compound, a titanium chelate compound, an aluminum chelate compound or the like. The zirconium chelate compound includes zirconium tetraacetylacetonate, zirconium tributoxy stearate, or the like.

(Composition)

The total content of the silica precursor (A) and the particles (C) in the coating composition is preferably from 30 to 100 mass%, and more preferably from 40 to 100 mass% based on the solid content (100 mass%) in the coating composition (provided that the content of the silica precursor (A) is calculated as $SiO_2$). When the total content of the silica precursor (A) and the particles (C) is the lower limit of the above range or more, adhesion to the transparent substrate 3 is excellent. When the total content of the silica precursor (A) and the particles (C) is the upper limit of the above range or less, cracking or film peeling of the non-transparent film 5 can be suppressed.

In a case where the coating composition contains the silica precursor (A), the content of the silica precursor (A) (calculated as $SiO_2$) in the coating composition is preferably from 35 to 95 mass%, and more preferably from 50 to 90 mass% based on the solid content (100 mass%) (provided that the content of the silica precursor (A) is calculated as $SiO_2$) in the coating composition. When the content of the silica precursor (A) is the lower limit of the above range or more, the adhesion strength to the transparent substrate 3 is sufficient. When the content of the silica precursor (A) is the upper limit of the above range or more, cracking or film peeling of the non-transparent film 5 can be sufficiently suppressed even though the non-transparent film 5 is thick.

In a case where the coating composition contains the silica precursor (A) and the silica precursor (A) contains either one or both of the silane compound (A1) and its hydrolytic condensate, the proportion of the silane compound (A1) and its hydrolytic condensate in the silane precursor (A) is preferably from 5 to 100 mass% based on the solid content (100 mass%) of the silica precursor (A) calculated as $SiO_2$. When the proportion of the silane compound (A1) and its hydrolytic condensate is the lower limit of the above range or more, cracking and film peeling of the non-transparent film 5 can be sufficiently suppressed even though the non-transparent film is thick.

In a case where the coating composition contains the silica precursor (A) and the silica precursor (A) contains either one or both of the tetraalkoxysilane and its hydrolytic condensate, the proportion of either one or both of the tetraalkoxysilane and its hydrolytic condensate in the silica precursor (A) is preferably from 60 to 100 mass% based on the solid content (100 mass%) of the silica precursor (A) calculated as $SiO_2$. When the proportion of either one or both of the tetraalkoxysilane and its hydrolytic condensate is the lower limit of the above range or more, the resulting non-transparent film 5 is more excellent in the abrasion resistance.

In a case where the silica precursor (A) contains either one or both of the silane compound (A1) and its hydrolytic condensate and either one or both of the tetraalkoxysilane and its hydrolytic condensate, it is preferred that based on the solid content (100 mass%) of the silica precursor (A) calculated as $SiO_2$, the proportion of either one or both of the silane compound (A1) and its hydrolytic condensate is greater than 0% and 50 mass% or less and that the proportion of either one or both of the tetraalkoxysilane and its hydrolytic condensate is greater than or equal to 60 mass% and less than 100 mass%.

The content of the liquid medium (B) in the coating composition is an amount in accordance with the solid content concentration of the coating composition.

The solid content concentration of the coating composition is preferably from 1 to 12 mass%, and more preferably from 1.5 to 10 mass% based on the entire amount (100 mass%) of the coating composition. When the solid content concentration is the lower limit of the above range or more, the liquid amount of the coating composition can be reduced. When the solid content concentration is the upper limit of the above range or less, the uniformity of the film thickness of the non-transparent film will be enhanced.

The solid content concentration of the coating composition is the total content of all the components except for the liquid medium (B) in the coating composition. Note that the content of the silica precursor (A) is calculated as $SiO_2$.

The content of the liquid medium (B1) having a boiling point of 150 °C or less in the coating composition is 86 mass% or more based on the entire amount of the liquid medium (B). By the coating composition containing the liquid medium (B1) in a proportion of 86 mass% or more, a film will be obtained when such a coating composition is applied to the transparent substrate by an electrostatic coating apparatus equipped with an electrostatic coating gun having a rotary atomizing head, followed by baking. If the proportion of the liquid medium (B1) is less than 86 mass%, the irregular structure may not be formed since the obtainable film will be smoothened before the solvent is volatilized and dried.

The content of the liquid medium (B1) is preferably 90 mass% or more based on the entire amount of the liquid medium (B). The content of the liquid medium (B1) may be 100 mass% based on the entire amount of the liquid medium (B).

In a case where the coating composition contains the particles (C), the content of the particles (C) is preferably from 0 to 40 mass%, more preferably from 0 to 30 mass% based on the solid content (100 mass%) (provided that the content of the silica precursor (A) is calculated as $SiO_2$) in the coating composition. When the content of the particles (C) is the lower limit of the above range or more, the resulting transparent substrate with film will have a sufficiently high haze and has a sufficiently low 60° specular glossiness on the surface of the film, whereby a sufficient antiglare effect will be obtained. When the content of the particles (C) is the upper limit of the above range or less, sufficient abrasion resistance will be obtained.

In a case where the coating composition contains the particles (C) and the particles (C) contain the flake-shaped particles (C1), the content of the flake-shaped particles (C1) is preferably 20 mass% or more, and more preferably 30 mass% or more based on the entire amount (100 mass%) of the particles (C). The upper limit is not particularly limited, and may be 100 mass%. When the proportion of the flake-shaped particles (C1) is the above lower limit or more, a more excellent non-see through effect will be obtained. Further, cracking or film peeling of the film can be sufficiently suppressed even though the film is thick.

(Viscosity)

The viscosity (hereinafter sometimes referred to as "liquid viscosity") of the coating composition at the application temperature is preferably 0.01 Pa·s or less, and particularly preferably from 0.001 to 0.008 Pa·s. When the liquid viscosity is the above upper limit or less, droplets formed when the liquid composition is sprayed will be finer, and a film having a desired surface shape can be easily formed. When the liquid viscosity is the above lower limit or more, the surface irregular shape of the film will be uniform.
The viscosity of the coating composition is a value measured by a type B viscometer.

(Preparation method)

The coating composition may be prepared, for example, by dissolving the silane precursor (A) in the liquid medium (B) to prepare a solution, and as necessary, mixing the liquid medium (B) additionally, a dispersion of the particles (C), or the like.
In a case where the particles (C) contain the flake-shaped particles (C1), and the silica precursor (A) contains a hydrolytic condensate of the tetraalkoxysilane, with a view to producing a film having desired performance with good reproducibility at a high level, it is preferred that a solution of the tetraalkoxysilane or a solution of a mixture of the tetraalkoxysilane and its hydrolytic condensate, is mixed with a dispersion of the flake-shaped particles (C1), and the tetraalkoxysilane is hydrolyzed and condensed in the presence of the flake-shaped particles (C1).

[Application step]

Application of the coating composition to the transparent substrate is carried out by electrifying the coating composition and spraying it by an electrostatic coating apparatus equipped with an electrostatic coating gun having a rotary atomizing head, whereby a coating film of the coating composition can be formed on the transparent substrate.

(Electrostatic coating apparatus)

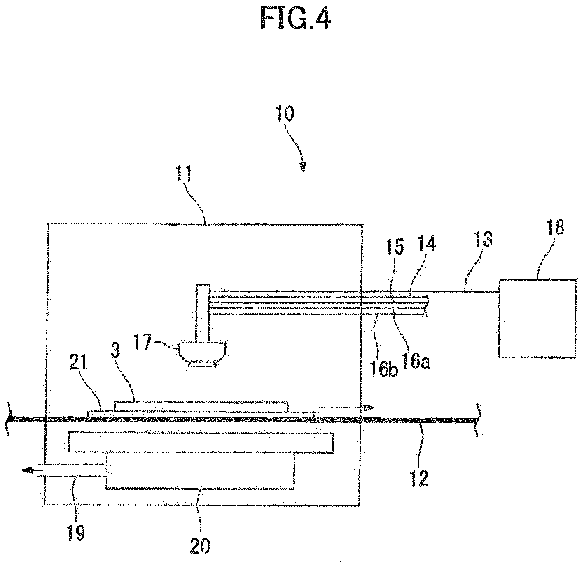

FIG. 4 is a view schematically illustrating an example of an electrostatic coating apparatus.
The electrostatic coating apparatus 10 comprises a coating booth 11, a chain conveyor 12, a plurality of electrostatic coating guns 17, a high voltage generating apparatus 18 and an exhaust box 20.
The chain conveyor 12 passes through the coating booth 11 and carries an electrically conductive substrate 21 and a transparent substrate 3 placed thereon in a predetermined direction.
The plurality of electrostatic coating guns 17 are aligned above the chain conveyor 12 in the coating booth 11, in order in a direction at right angles to the direction of conveyance of the transparent substrate 3, and with each of the electrostatic coating guns 17, a high voltage cable 13, a coating composition supply line 14, a coating composition recovery line 15 and two-system air supply lines 16a and 16b being connected.
The high voltage generating apparatus 18 is connected with the electrostatic coating gun 17 via the high voltage cable 13 and is grounded.
The exhaust box 20 is disposed below the electrostatic coating gun 17 and the chain conveyor 12, and an exhaust duct 19 is connected with it.
The electrostatic coating gun 17 is fixed to a nozzle set frame (not shown). By the nozzle set frame, the distance from the nozzle tip of the electrostatic coating gun 17 to the transparent substrate 3, the angle of the electrostatic coating gun 17 relative to the transparent substrate 3, the direction of alignment of the plurality of electrostatic coating guns 17 relative to the direction of conveyance of the transparent substrate 3, and the like can be adjusted.
Since a high voltage is applied to the nozzle tip of the electrostatic coating gun 17, the coating composition supply line 14 and the recovery line 15, a portion connecting the electrostatic coating gun 17, the supply line 14 and the recovery line 15, with a metal (such as a side wall perforated portion of the nozzle set frame or the coating booth 11) is insulated with a resin or the like.
The chain conveyor 12 comprises a plurality of plastic chains, and part of the plurality of plastic chains are conductive plastic chains. The conductive plastic chains are grounded via metal chains (not shown) into which the plastic chains are inserted and the ground cable (not shown) of a drive motor (not shown) of the metal chains.

The electrically conductive substrate 21 is used to sufficiently ground the transparent substrate 3 placed thereon, via the electrically conductive plastic chains of the chain conveyor 12, the metal chains and the ground cable of the drive motor. By the transparent substrate 3 being sufficiently grounded, the coating composition will be uniformly attached to the transparent substrate 3.

As the electrically conductive substrate 21, a metal mesh tray is preferred, by which a temperature decrease of the transparent substrate 3 is suppressed, and the temperature distribution can be made uniform.

(Electrostatic coating gun)

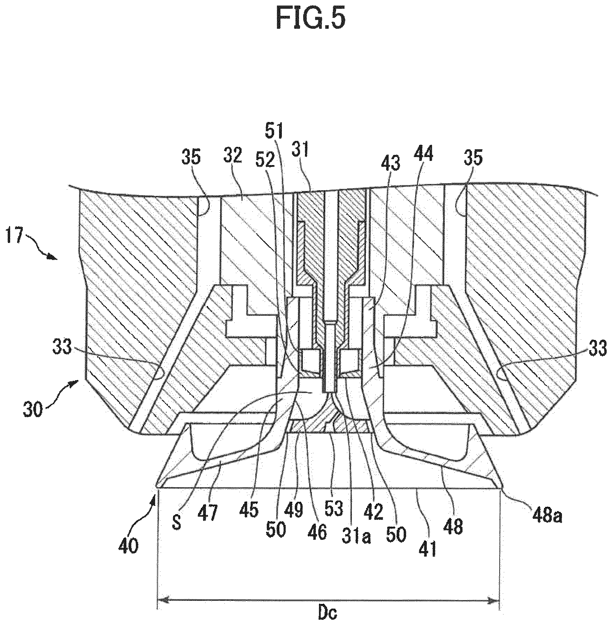

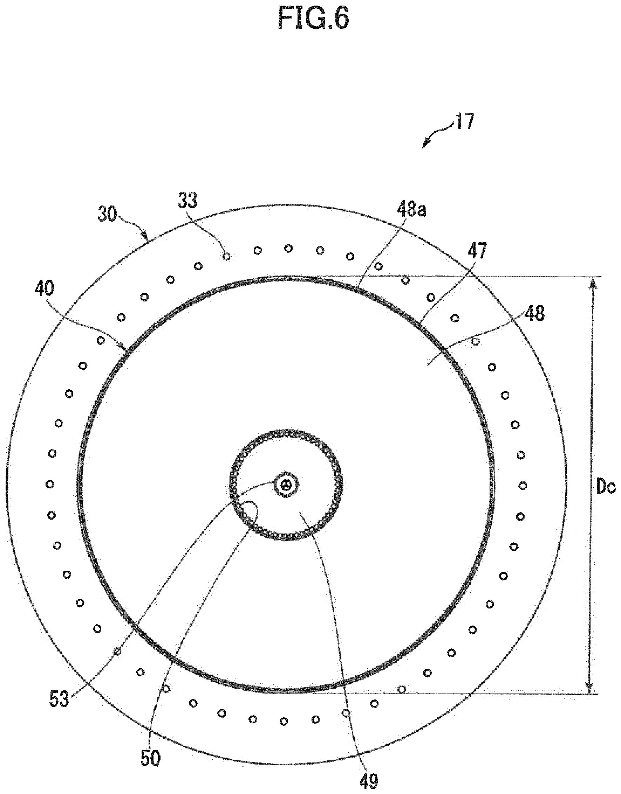

FIG. 5 is a cross-sectional view schematically illustrating the electrostatic coating gun 17. FIG. 6 is a front view schematically illustrating the electrostatic coating gun 17 as observed from the front.

The electrostatic coating gun 17 comprises a gun main body 30 and a rotary atomizing head 40. The rotary atomizing head 40 is disposed at the front end of the gun main body 30 with its axis line in parallel with the front-back direction.

The electrostatic coating gun 17 has such a constitution that the coating composition supplied to the rotary atomizing head 40 is atomized and emitted (sprayed) by centrifugal force by rotationally driving the rotary atomizing head 40.

In the description of the electrostatic coating gun 17, "front" in "from the front", "the front end", or the like, means the direction of spray of the coating composition, and the opposite direction is the back side. The bottom side in FIGS. 5 and 6 corresponds to the front of the electrostatic coating gun 17.

In the gun main body 30, a coating material supply tube 31 is accommodated as fixed on the same axis as the rotary atomizing head 40.

The gun main body 30 has an air turbine motor (not shown) therein, and the air turbine motor is provided with a rotating shaft 32. Further, with the air turbine motor, one system (the supply line 16a) between the two system air supply lines 16a and 16b is connected, so that the number of revolutions of the rotating shaft 32 can be controlled by the air pressure from the supply line 16a. The rotating shaft 32 is disposed so as to surround the coating material supply tube 31 on the same axis as the rotary atomizing head 40.

In this example, the air turbine motor is employed as a means to rotationally drive the rotating shaft 32, however, a rotary driving means other than the air turbine motor may be used.

The gun main body 30 has a plurality of shaping air outlets 33 formed, and each of the plurality of outlets 33 has an air supply path 35 to supply the shaping air. Further, with each air supply path 35, one system (the supply line 16b) between the two-system air supply lines 16a and 16b is connected, so that the air (shaping air) can be supplied to the outlet 33 via the air supply path 35.

The plurality of outlets 33 are formed at regular intervals on a concentric circle centering on the shaft center, in the front view of the electrostatic coating gun 17. Further, the plurality of outlets 33 are formed so as to be gradually apart from the shaft center toward the front of the electrostatic coating gun 17, in the side view of the electrostatic coating gun 17.

The rotary atomizing head 40 comprises a first member 41 and a second member 42. The first member 41 and the second member 42 are tubular.

The first member 41 comprises a shaft attaching portion 43, a holding portion 44 extending from the shaft attaching portion 43 to the front, a peripheral wall 45 extending from the holding portion 44 to the front, an expanding portion 47 extending from the peripheral wall 45 to the front, and a front wall 49 compartmentalizing the center hole of the first member 41 into the back and the front at a boundary between the peripheral wall 45 and the expanding portion 47, integrally formed.

The holding portion 44 is to hold the second member 42 on the same axis as the first member 41.

The inner peripheral surface of the peripheral wall 45 forms a tapered guide plane 46 covering the entire region of the rotary atomizing head 40 in the axis direction, gradually expanding toward the front.

The expanding portion 47 expands in a cup-shape toward the front, and the front surface of the expanding portion 47 forms a diffusing surface 48 gradually expanding toward the front.

An outer peripheral edge 48a of the diffusing surface 48 (the expanding portion 47) has many fine cuts to form the coating composition into fine droplets provided substantially at regular intervals over the whole circumference.

The front wall 49 has emission holes 50 penetrating the peripheral edge of the front wall 49 in the front-back direction. The emission holes 50 are circular, and a plurality of the emission holes are formed at the regular angle pitch in the circumferential direction. Further, the penetrating direction of the emission holes 50 is in parallel with the direction of tilt of the guide plane 46 of the peripheral wall 45.

The center portion within the back surface of the front wall 49 is in a conical shape protruding backward. Further, at this center portion, a through-hole 53 extending from the center on the front surface of the front wall 49 toward the back, branching in three directions in the middle and opening on the peripheral surface of the conical portion, is formed.

The second member 42 comprises a tubular portion 51 and a back wall 52 integrally formed. The back wall 52 is disposed at the front end of the tubular portion 51. At the center of the back wall 52, a circular through-hole is formed, into which the front end of the coating material supply tube 31 can be inserted.

In the rotary atomizing head 40, a space surrounded by the front wall 49, the peripheral wall 45 and the back wall 52 is considered as a storage room S. This storage room S communicates with the diffusing surface 48 via the plurality of emission holes 50.

In the electrostatic coating gun 17, the front end of the coating material supply tube 31 is inserted into the through-hole at the center of the back wall 52 so that an exhaust port 31a on the front end of the coating material supply tube 31 opens in the storage room S, whereby the coating composition can be supplied to the storage room S via the coating material supply tube 31.

The electrostatic coating apparatus and the electrostatic coating gun are not limited to ones illustrated in the drawings. As the electrostatic coating apparatus, a known electrostatic coating apparatus may be employed as long as it is equipped with an electrostatic coating gun having a rotary atomizing head. As the electrostatic coating gun, a known electrostatic coating gun may be employed as long as it has a rotary atomizing head.

(Application method)

In the electrostatic coating apparatus 10, the coating composition is applied to the transparent substrate 3 as follows.

The transparent substrate 3 is placed on the electrically conductive substrate 21. Further, a high voltage is applied to the electrostatic coating gun 17 by a high voltage generating apparatus 18. At the same time, the coating composition is supplied from the coating composition supply line 14 to the electrostatic coating gun 17, and the air is supplied from the respective two-system air supply lines 16a and 16b to the electrostatic coating gun 17.

The air supplied from the air supply line 16b is supplied to the air supply path 35 in the gun main body 30 and is blown as the shaping air from the opening of the outlets 33.

The air supplied from the air supply line 16a drives the air turbine motor in the gun main body 30 and rotates the rotating shaft 32, whereby the coating composition supplied from the coating composition supply line 14 via the coating material supply tube 31 to the storage room S moves forward along the guide plane 46 of the peripheral wall 45 by centrifugal force, passes through the emission holes 50 and is supplied to the diffusing surface 48. Part of the coating composition passes through the through-hole 53 at the center portion and can be supplied to the diffusing surface 48. Note that, since the guide plane 46 of the peripheral wall 45 is in a tapered shape extending toward the emission holes 50, the coating composition in the storage room S securely arrives at the emission holes 50 without remaining in the storage room S, by centrifugal force.

Furthermore, the coating composition supplied to the diffusing surface 48 moves toward the outer peripheral edge 48a side as being diffused along the diffusing surface 48 by centrifugal force, forms a liquid membrane of the coating composition on the diffusing surface 48, is formed into fine droplets at the outer peripheral edge 48a of the diffusing surface 48 (the expanding portion 47), which radially fly.

The droplets of the coating composition flying from the rotary atomizing head 40 are guided by the flow of the shaping air to the transparent substrate 3 direction. Further, the droplets are negatively charged and attracted to the grounded transparent substrate 3 by electrostatic attraction. Accordingly, they are efficiently attached to the surface of the transparent substrate 3.

Part of the coating composition which has not been sprayed from the electrostatic coating gun 17 is recovered in a coating composition tank (not shown) through the coating composition recovery line 15. Further, part of the coating composition which had been sprayed from the electrostatic coating gun 17 but has not been attached to the transparent substrate 3 is drawn into the exhaust box 20 and is recovered through the exhaust duct 19.

The surface temperature of the transparent substrate 3 is preferably 60 °C or lower, preferably from 15 to 50 °C, and more preferably from 20 to 40 °C. When the surface temperature of the transparent substrate 3 is the lower limit of the above range or higher, the liquid medium (B) in the coating composition will rapidly evaporate, whereby a sufficient irregular structure can be easily formed.

The rate of conveyance of the transparent substrate 3 is preferably from 0.6 to 20.0 m/min, and more preferably from 1.5 to 15.0 m/min. When the rate of conveyance of the transparent substrate 3 is 0.6 m/min or more, the productivity will be enhanced. When the rate of conveyance of the transparent substrate 3 is 20.0 m/min or less, the thickness of the coating composition applied to the transparent substrate 3 can be controlled easily.

The number of conveyance times of the transparent substrate 3, that is, the number of applications of the coating composition to the transparent substrate 3 by making the transparent substrate 3 pass below the electrostatic coating gun 17, is properly set depending upon the desired haze, clarity, or the like. In view of the non-see through property, it is preferably one or more, and more preferably two or more.

The diameter Dc of the outer peripheral edge 48a of the rotary atomizing head 40 of the electrostatic coating gun 17 (the maximum diameter of the diffusing surface 48, hereinafter sometimes referred to as "cup diameter") is preferably 50 mm or more, more preferably from 55 to 90 mm, and particularly preferably from 60 to 80 mm. When the cup diameter is the above lower limit or more, centrifugal force when the rotary atomizing head 40 rotates is large, the droplets of the coating composition flying from the rotary atomizing head 40 become finer, and a non-transparent film having a desired surface shape can be easily formed. When the cup diameter is the upper limit of the above range or less, the cup can stably be rotated.

The distance from the tip (the front end of the rotary atomizing head 40 in the direction of spray of the coating composition) of the electrostatic coating gun 17 to the transparent substrate 3 (hereinafter sometimes referred to as nozzle height) is properly adjusted depending upon the width of the transparent substrate 3, the film thickness of the coating composition applied to the transparent substrate 3, or the like. Typically, the distance is from 150 to 450 mm. When the distance to the transparent substrate 3 is short, the coating efficiency increases, however, if it is too short, electrical discharge has a high possibility of occurring, such being problematic in view of safety. On the other hand, as the distance to the transparent substrate 3 is longer, the coating region broadens, however, if it is too long, a problem of a decrease of the coating efficiency will arise.

The voltage applied to the electrostatic coating gun 17 is properly adjusted depending upon the amount of the coating composition applied to the transparent substrate 3, or the like, and is usually within a range of from -30 kV to -90 kV. The higher the absolute value of the voltage is, the higher the coating efficiency becomes. Note that the coating efficiency saturates when the applied voltage reaches a predetermined value, although it depends on the liquid properties, the application environment and the application conditions.

The amount of the coating composition (hereinafter sometimes referred to as the coating liquid amount) to be supplied to the electrostatic coating gun 17 is properly adjusted depending upon the amount of the coating composition to be applied to the transparent substrate 3, or the like. The supply amount is preferably less than 70 mL/min, and more preferably from 10 to 50 mL/min. When the coating liquid amount is the above upper limit or less, the droplets of the coating composition flying from the rotary atomizing head 40 become finer, and a non-transparent film having a desired surface shape is likely to be formed. When the coating liquid amount is the above lower limit or more, the film becomes uniform.

The pressure of the air supplied from each of the two-system air supply lines 16a and 16b to the electrostatic coating gun 17, is properly adjusted depending upon the amount of the coating composition applied to the transparent substrate 3, or the like. The pressure is typically from 0.01 MPa to 0.5 MPa.

By the air pressure supplied from each of the two-system air supply lines 16a and 16b to the electrostatic coating gun 17, a coating composition application pattern can be controlled.

The coating composition application pattern is a pattern formed by the droplets of the coating composition sprayed from the electrostatic coating gun 17 on the transparent substrate.

When the air pressure of the air supplied to the air turbine motor in the electrostatic coating gun 17 is increased, the rotational speed of the rotating shaft 32 increases, and the rotational speed of the rotary atomizing head 40 increases, whereby the droplets flying from the rotary atomizing head 40 become smaller, and the application pattern becomes greater.

When the air pressure of the air supplied to the air supply path 35 in the electrostatic coating gun 17 is increased and the air pressure of the air (shaping air) blown from the outlets 33 is increased, the droplets flying from the rotary atomizing head 40 are prevented from spreading, and the application pattern becomes smaller.

The air pressure of the air supplied to the air turbine motor is set depending upon the rotational speed of the rotary atomizing head 40 (hereinafter sometimes referred to as the number of cup revolutions). The higher the air pressure is, the higher the number of cup revolutions is.

The number of cup revolutions is preferably 30,000 rpm or more, more preferably from 30,000 to 80,000 rpm, and particularly preferably from 32,000 to 80,000 rpm. When the number of cup revolutions is the lower limit of the above range or more, the droplets of the coating composition flying from the rotary atomizing head 40 become finer, and a non-transparent film having a desired surface shape is likely to be formed. When the number of cup revolutions is the upper limit of the above range or less, an excellent coating efficiency will be obtained.

The number of cup revolutions is measured by a measuring instrument (not shown) attached to the electrostatic coating apparatus 10.

The air pressure of the air supplied to the air supply path 35 is preferably such a pressure that the air pressure of the shaping air (hereinafter sometimes referred to as the shaping pressure) is within a range of from 0.01 to 0.3 MPa. The shaping pressure is more preferably from 0.01 to 0.25 MPa, particularly preferably from 0.01 to 0.2 MPa. When the shaping pressure is the lower limit of the above range or more, the coating efficiency will be enhanced according to the enhancement of the effect to suppress flying of the droplets. When the shaping pressure is the upper limit of the above range or less, the coating width can be secured.

[Baking step]

In the baking step, the coating film of the coating composition formed on the transparent substrate in the application step is baked, to obtain a film.

Baking may be carried out simultaneously with application by heating the transparent substrate when the coating composition is applied to the transparent substrate, or may be carried out by heating the coating film after the coating composition is applied to the transparent substrate.

The baking temperature is preferably 30 °C or higher, and for example, when the transparent substrate is glass, the temperature is more preferably from 100 to 750 °C, and further preferably from 150 to 550 °C.

In the above-described manufacturing method, the predetermined coating composition is sprayed by the electrostatic coating gun equipped with the rotary atomizing head to form a non-transparent film 5 containing first projections 5a and second projections 5b on its surface.

Moreover, in the manufacturing method, the surface shape of the non-transparent film 5 to be formed can be controlled e.g. by the viscosity of the coating composition, the application conditions (such as the cup diameter, the coat liquid amount and the number of cup revolutions) in the application step, and the temperature in the baking step. For example, when the coating composition is electrified and sprayed, the droplets become smaller, when the viscosity of the coating composition is lower, the cup diameter is larger, the coating liquid amount is smaller, or the number of cup revolutions is larger. The smaller the droplets are, the greater the number of the second projections 5b per 1 $\mu m^2$ is.

<Application>

The application of the transparent substrate with film of the present invention is not particularly limited. Specific examples include building exterior glasses, building interior glasses (kitchen cabinets, table tops, shower doors, partition glasses, or the like), decorative glasses, smoke shield glasses for vehicle, or the like.

## EXAMPLES

The present invention will be described in detail with reference to examples, as follows. However, the present invention is not limited to the following description.

From among Examples 1 to 14, which will be described later, Examples 1 to 4 are practical examples, and Examples 5 to 7 are comparative examples. Moreover, Examples 11 to 13 are practical examples, and Example 14 is a comparative example.

Evaluation methods and materials employed in each example will be mentioned below.

<Evaluation methods>

(Measurement of liquid viscosity)

Liquid viscosity was measured by using a type B viscometer manufactured by EKO Instruments.

(Surface shape measurement)

The surface shape was measured by a laser microscope VK-X100 manufactured by KEYENCE CORPORATION (as the object lens, one with a magnification of "×100" was used; the observation region: 109×145 $\mu$m, magnification: 1000).

Since the measurement results are represented by the maximum, minimum and average values in the observation region, there is substantially no difference in the results when an object lens with a magnification of ×100 is selected, even if the observation region is slightly different. The measurement mode was "surface shape", the measurement quality was "high definition (2048×1536)", and the pitch was "0.01 $\mu$m".

(Surface shape analysis)

The xyz data on the surface shape obtained by the surface shape measurement were analyzed by an image processing software SPIP (version 6.4.3) manufactured by Image Metorology, and the following items were calculated:

The maximum height of the first projections (P to V) ;
the average diameter of the first projections (the average of the diameters (as calculated as an exact circle) of the cut surfaces of the projections with a diameter (as calculated as an exact circle) of larger than 10 $\mu$m among the

cut surfaces of the projections present in a cross section at a height of 0.05 μm + the bearing height);

the average diameter of the second projections (the average of the diameters (as calculated as an exact circle) of the cut surfaces of the projections with a diameter (as calculated as an exact circle) of from 1 to 10 μm among the cut surfaces of the projections present in a cross section at a height of 0.5 μm + the bearing height);

the maximum diameter and the minimum diameter of the second projections (the diameter (as calculated as an exact circle) of the cut surface of the largest projection and the diameter (as calculated as an exact circle) of the cut surface of the smallest projection among the cut surfaces of the projections with a diameter (as calculated as an exact circle) of from 1 to 10 μm present in a cross section at a height of 0.5 μm + the bearing height);

the number of the second projections in the observation region (a region of or 109×145 μm) (the number of the cut surfaces of the projections with a diameter (as calculated as an exact circle) of 1 μm or more present in a cross section at a height of 0.5 μm + the bearing height);

the density of the second projections (the number of the second projections in the observation region per 1 μm²); and

the average height of the second projections (the average of the heights of the second projections present in the measured region based on the bearing height).

More specifically, the respective items were calculated by the following procedure.

For calculation of the maximum height of the first projections (P to V), in the gradient correction, mode: "custom", entire plane correction: "multinominal fitting", order: "3", Z-offset method: "Set minimum value to Zero" were selected, the detection method was "particles detection", for shape formation, "Preserve Holes in Shapes" option was selected, "Contour smoothing" option was selected, and "Filter size" was set at 51 points. In filtering, "Border Mode" was selected and the minimum diameter was set to 10.0 μm, and in increasing the threshold level, the threshold level at which the shape with a diameter of 10 μm or more was no longer detected was taken as the maximum height of the first projections (P to V).

For calculation of the average diameter of the first projections, in the gradient correction, mode: "quality priority", entire plane correction: "multinominal fitting", order: "3", Z-offset method: "Set Bearing Height to Zero" were selected, the detection method was "particles detection", for shape formation, "Preserve Holes in Shapes" option was selected, "Contour smoothing" option was selected, and "Filter Size" was set at 51 points. The threshold level was set to 0.05 μm, and in filtering, "Border Mode" was selected, and the minimum diameter was set to 10.0 μm.

For calculation of the average diameter of the second projections, the maximum diameter and the minimum diameter of the second projections, the number of the second projections in the observation region and the average height of the second projections, in the gradient correction, mode: "quality priority", entire plane correction: "multinominal fitting", order: "3", Z-offset method: "Set Bearing Height to Zero" were selected, the detection method was "particles detection", and for shape formation, "Preserve Holes in Shapes" option was switched off, "Contour smoothing" option was selected, and "Filter size" was set at 51 points. The threshold level was set to 0.05 μm, and in filtering, "Border Mode" option was selected, and the minimum diameter was set to 1.0 μm, the maximum diameter was set to 10.0 μm.

(Evaluation of non-see through property)

(Evaluation method 1: measurement of a clarity)

The measurement of a clarity was performed by the following procedure using a variable angle photometer GC5000L manufactured by NIPPON DENSHOKU INDUSTRIES CO., LTD.

When the direction parallel to the thickness direction of the transparent substrate from the first surface side of the transparent substrate was set to 0°, a first light is emitted in a direction of angle θ=0°±0.5° (in the following, also referred to as a "direction of angle of 0°"). The first light penetrates through the transparent substrate and is output from the second surface. A 0° transmitted light, which is output from the second surface in the direction of angle of 0°, is received, a luminance of the light is measured, and the luminance is set as a "luminance of 0° transmitted light".

Then, the angle q for receiving the light emitted from the first surface is changed within a range from -30° to 30°, and the same operation is performed. Thus, a luminance distribution of light that penetrates the transparent substrate and is output from the second surface is measured. A sum of the distribution is set as a "luminance of entire transmitted light".

Then, a clarity (resolution index T) is calculated from the following formula (1):

```
Clarity (resolution index T) = 1 - {((luminance
of entire transmitted light) - (luminance of 0°
transmitted light)) / (luminance of entire transmitted
light)}        … formula (1)
```

It is confirmed that the clarity (resolution index T) correlates with a result of determination for resolution by a visual observation of an observer, and the clarity exhibits a behavior close to a human visual appreciation. For example, a transparent substrate exhibiting a small (close to zero) resolution index T has a low resolution. In contrast, a transparent substrate exhibiting a great resolution index T has an excellent resolution. Thus, the resolution index T can be used as a quantitative index for determining the degree of resolution of the transparent substrate.

(Evaluation method 2: Haze measurement)

The haze of the transparent substrate with non-transparent film was measured in accordance with the method defined in JIS K7136: 2000 using a haze meter (HR-100 manufactured by MURAKAMI COLOR RESEARCH LABORATORY).

(Evaluation method 3: evaluation by visual observation)

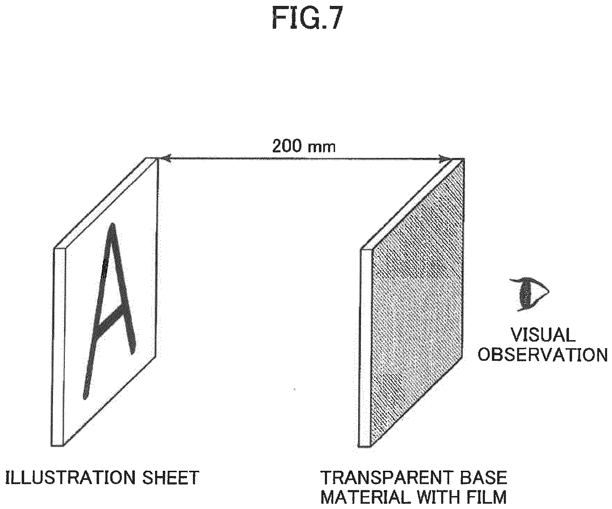

As illustrated in FIG. 7, a transparent substrate with a film was arranged in front of a dial plate (character size: 100 mm$^2$) separated from the plate by 200 mm, and a degree of identification for a character viewed through the transparent substrate with film was examined.
The non-see through property was evaluated with reference to the following criteria:

X: identifiable at a location separated by 200 mm (non-see through property is insufficient); and
○: not identifiable at a location separated by 200 mm.

(Evaluation of yellowing)

A glass sample was exposed for 168 hours at a temperature of 60 °C and a humidity of 95% in a thermohygrostat bath, and an appearance was observed. When a yellowing occurs on a surface of the substrate, a turbidity, an unevenness, a point defect, or the like is generated:

Appearance is not changed: ○; and
Appearance is changed (turbidity, unevenness, point defect or the like occurs): X.

(Preparation of coating liquid (C))

A base liquid (A), which will be described later, and a silane compound solution (B), which will be described later, were mixed to prepare a coating liquid (C). A ratio of solid content concentrations of methyltrimethoxysilane (KBM-13, manufactured by Shin-Etsu Chemical Co., Ltd.), a dispersion of flake-shaped silica particles (prepared by the method disclosed in Japanese Patent No. 4063464, a viscosity at 25 °C: 0.220 Pa·s), and 1,6-Bis(trimethoxysilyl)hexane (KBM-3066, manufactured by Shin-Etsu Chemical Co., Ltd.) was set to 75:15:10, and a total solid content concentration was set to 1.5%.

(Preparation of base liquid (A))

Methyltrimethoxysilane and a dispersion of flake-shaped silica particles were added to modified ethanol (SOLMIX (registered trademark) AP-11, manufactured by Japan Alcohol Trading Co., Ltd., a mixed solvent containing ethanol as the main component), and a mixture was stirred for 30 minutes. To the mixture, a mixed liquid of an ion-exchange water and an aqueous nitric acid solution (nitric acid concentration: 61 mass%) was added, and stirred for 60 minutes, to prepare a base liquid (A).

(Preparation of silane compound solution (B))

A mixed liquid of an ion-exchange water and an aqueous nitric acid solution (nitric acid concentration: 61 mass%) was added to modified ethanol, and a mixed liquid was stirred for 5 minutes. 1,6-Bis(trimethoxysilyl)hexane was added to the mixed liquid. The mixed liquid was stirred in a water bath at 60 °C for 15 minutes, to prepare a silane compound solution (B).

[First Example]

(Washing of transparent substrate)

As the transparent substrate, a soda lime glass (FL5, a glass plate having a size of 100 mm × 100 mm and a thickness of 5.0 mm, manufactured by Asahi Glass Company, Limited) was prepared. A surface of the glass was washed with an aqueous sodium hydrogen carbonate solution, rinsed with ion-exchanged water, and dried.

(Electrostatic coating apparatus)

An electrostatic coating apparatus (liquid electrostatic coater, manufactured by ASAHI SUNAC CORPORATION) having the same constitution as the electrostatic coating apparatus 10, illustrated in FIG. 4, was prepared. For the electrostatic coating gun, a rotary atomizing electrostatic automatic coating gun (Sun Bell ESA120, cup diameter: 70 mm, manufactured by ASAHI SUNAC CORPORATION) was prepared.
In order to make grounding of the transparent substrate easier, a metal mesh tray was prepared, as an electrically conductive substrate.

(Electrostatic coating)

The temperature in the coating booth of the electrostatic coating apparatus was set to be within a range of 25±1 °C, and the humidity was set to be within a range of 50%±10%.
On a chain conveyor of the electrostatic coating apparatus, a washed transparent substrate, which was preliminarily heated to 30±3 °C, was placed via the electrically conductive substrate. While the transparent substrate was carried at the constant speed by the chain conveyor, the coating liquid (C) at a temperature within a range of 25±1 °C was applied to the surface "T" (the opposite side from the surface which was in contact with molten tin at the time of production by float process) of the transparent substrate by an electrostatic coating method under application conditions (the coating liquid amount, the number of cup revolutions, the nozzle height, the voltage and the number of application) as identified in TABLE 1, and baked under heating temperature conditions, as identified in TABLE 1, for 30 minutes, thereby obtaining a transparent substrate with non-transparent film.
With respect to the obtained transparent substrate with non-transparent film, the aforementioned evaluations were performed. Results of evaluation are shown in TABLE 2.

[Second Example to fifth Example]

Transparent substrates with non-transparent film in the second Example to fifth Example were prepared in the same manner as in the first Example, under the application conditions as identified in TABLE 1.
With respect to the obtained transparent substrate with non-transparent film, the aforementioned evaluations were performed. Results of evaluation are shown in TABLE 2.

[TABLE 1]

|  | preparation method | heat treatment temperature after coating (°C) | coating liquid amount (ml/min) | number of cup revolutions (krpm) | nozzle height (mm) | electric voltage (kV) | number of applications (times) |
|---|---|---|---|---|---|---|---|
| 1st Example | spray coating | 200 | 25 | 35 | 255 | 60 | 4 |
| 2nd Example | spray coating | 200 | 25 | 35 | 255 | 60 | 8 |

(continued)

| | preparation method | heat treatment temperature after coating (°C) | coating liquid amount (ml/min) | number of cup revolutions (krpm) | nozzle height (mm) | electric voltage (kV) | number of applications (times) |
|---|---|---|---|---|---|---|---|
| 3rd Example | spray coating | 650 | 25 | 35 | 255 | 60 | 4 |
| 4th Example | spray coating | 650 | 25 | 35 | 255 | 60 | 8 |
| 5th Example | spray coating | 200 | 25 | 35 | 255 | 60 | 2 |
| 6th Example | etching A | - | - | - | - | - | - |
| 7th Example | etching B | - | - | - | - | - | - |

[TABLE 2]

| | preparation method | 1st projections max height P to V (μm) | 2nd projections | | | | | | | refractive index | non-see through property | | | suppress yellowing | air-cooling strengthening |
|---|---|---|---|---|---|---|---|---|---|---|---|---|---|---|---|
| | | | average diameter (μm) | average diameter (μm) | min. diameter (μm) | max diameter (μm) | number in obs. region | density (/μm²) | average height (μm) | | clarity | Haze (%) | visual obs. | | |
| 1st Ex | spray coating | 8.39 | 27.366 | 3.469 | 1.034 | 9.928 | 82 | 0.00516 | 3.175 | 1.45 | 0.05 | 90.8 | ○ | ○ | ○ |
| 2nd Ex | spray coating | 17.25 | 24.980 | 3.742 | 1.013 | 9.606 | 47 | 0.00297 | 3.388 | 1.45 | 0.04 | 92.7 | ○ | ○ | ○ |
| 3rd Ex | spray coating | 8.04 | 33.012 | 3.080 | 1.012 | 9.680 | 80 | 0.00759 | 2.975 | 1.45 | 0.11 | 85.6 | ○ | ○ | ○ |
| 4th Ex | spray coating | 12.25 | 30.980 | 3.749 | 1.022 | 9.680 | 67 | 0.00559 | 2.885 | 1.45 | 0.06 | 90.3 | ○ | ○ | ○ |
| 5th Ex | spray coating | 5.51 | 34.638 | 3.887 | 1.027 | 9.703 | 55 | 0.00348 | 1.292 | 1.45 | 0.38 | 50.9 | X | ○ | ○ |
| 6th Ex | etching A | 12.01 | 34.942 | 6.721 | 6.439 | 7.003 | 2 | 0.00009 | 1.991 | - | 0.04 | 91.1 | ○ | X | X |
| 7th Ex | etching B | 5.93 | 37.068 | 3.125 | 1.223 | 6.564 | 6 | 0.00035 | 0.866 | - | 0.14 | 54.0 | X | X | X |

[Sixth Example]

(Etching A)

A glass plate was washed with detergent and water, and dried.

As an acidic etchant, a frost treatment liquid was prepared by dissolving, in 660 ml of pure water, 170 ml of hydrogen fluoride aqueous solution of 40%, 100 g of $Na_2CO_3$, and 170 ml of acetic acid.

The glass plate was subjected to an etching treatment by immersing in the frost treatment liquid for eight minutes, and thereby a fine irregular pattern was formed on a surface of the glass plate that is a transparent substrate. The aforementioned evaluation was performed for the transparent substrate with non-transparent film obtained as above. Results of evaluation are shown in TABLE 2.

[Seventh Example]

(Etching B)

A prewashing was performed for a glass plate by immersing the glass plate in a hydrofluoric acid of 2.5 mass% for 30 seconds. A frost treatment liquid was prepared by dissolving, in 700 ml of pure water, 150 g of potassium fluoride and 300 ml of hydrogen fluoride aqueous solution of 50 mass%.

A pre-etching treatment was performed for the glass plate by immersing the glass plate in the frost treatment liquid for 30 seconds.

The glass plate was extracted from the frost treatment liquid, and washed with running water for ten minutes. Then, an etching treatment was performed for the glass plate by immersing the glass plate in a hydrogen fluoride aqueous solution of 5 mass% for eight minutes, and thereby a fine irregular pattern was formed on a surface of the glass plate that is a transparent substrate. The aforementioned evaluation was performed for the transparent substrate with non-transparent film obtained as above. Results of evaluation are shown in TABLE 2.

As indicated in the aforementioned results, in the transparent substrates with non-transparent film of the first to fourth Examples, the clarities are 0.25 or less, and exhibit excellent non-see through properties. Moreover, the hazes are 70% or more, and exhibit excellent non-see through properties. Furthermore, in the transparent substrates with non-transparent film of the first to fourth Examples, the non-transparent films act as an alkali barrier. Thus, the non-transparent films have effects of suppressing yellowing. Note that, as indicated by the third and fourth Examples, even if the baking treatment at high temperature is performed, the non-transparent film has an excellent non-see through property. Thus, the transparent substrate with non-transparent film can be subjected to the air-cooling strengthening.

(Eleventh Example)

A transparent substrate with non-transparent film was manufactured by the same method as in the first Example.

In the eleventh Example, a coating liquid was prepared according to the following procedure. The coating process was performed with the coating liquid.

(Preparation of coating liquid)

To modified ethanol (SOLMIX (registered trademark) AP-11, manufactured by Japan Alcohol Trading Co., Ltd., a mixed solvent containing ethanol as the main component), tetraethoxysilane (KBE-04, manufactured by Shin-Etsu Chemical Co., Ltd.), methyltrimethoxysilane (KBM-13, manufactured by Shin-Etsu Chemical Co., Ltd.), and a dispersion of flake-shaped silica particles (prepared by the method disclosed in Japanese Patent No. 4063464) were added in this order, and a mixture was stirred for 30 minutes. To the mixture, a mixed liquid of an ion-exchange water and an aqueous nitric acid solution (nitric acid concentration: 61 mass%) was added, and stirred for 60 minutes, to prepare a base liquid (A). A ratio of solid content concentrations of Tetraethoxysilane, Methyltrimethoxysilane, and the dispersion of flake-shaped silica particles was set to 41:41:18, and a total solid content concentration was set to 6.0%.

(Coating step)

Next, by using the aforementioned electrostatic coating apparatus, the coating liquid (Y) was applied to the aforementioned surface "T" of the transparent substrate.

In the electrostatic coating apparatus, the temperature in the coating booth was set to be within a range of 50%±10%. Moreover, the temperature of the transparent substrate on the chain conveyer was set to be within 30±3 °C. The rate of conveyance of the transparent substrate was set to 3 m/min. The coating liquid amount was set to 30 ml/min, the number of cup revolutions was set to 25000 rpm, the nozzle height was set to 245 mm, the diameter of cut was set to 70 mm, the electric voltage was set to 40 kV, and the number of applications was set to four.

Afterwards, the transparent substrate was baked at 230 °C for 30 minutes, and thereby the transparent substrate with non-transparent film was obtained.

[Twelfth to fourteenth Examples]

Transparent substrates with non-transparent film were manufactured by the same method as in the eleventh Example. However, in the twelfth to fourteenth Examples, solid content concentrations contained in the coating liquid (Y) and/or conditions in the coating step were changed from those in the eleventh Example.

TABLE 3, in the following, shows the solid content concentrations contained in the coating liquid (Y) used in the eleventh to fourteenth Examples, and coating conditions as a whole.

[TABLE 3]

| | solid content concentration (wt%) | coating condition | | heat treatment temperature after coating (°C) |
|---|---|---|---|---|
| | | coating liquid amount (ml/min) | number of applications (times) | |
| 11th Ex | 6 | 30 | 4 | 230 |
| 12th Ex | 6 | 75 | 4 | 230 |
| 13th Ex | 20 | 60 | 1 | 230 |
| 14th Ex | 24 | 60 | 1 | 230 |

(Evaluation)

For each transparent substrate with non-transparent film, the aforementioned evaluation was performed. Moreover, for each transparent substrate with non-transparent film, a standard deviation of heights, an area ratio, and a density of the first projections were calculated. Furthermore, a finger sliding property of the non-transparent film was evaluated.

The standard deviation of heights of the first projections was obtained by measuring a maximum height of each first projection within the observation region (region of 109x145 $\mu$m) using the aforementioned image processing software, and calculating a standard deviation of the heights.

The area ratio of the first projection was obtained by measuring an area of a cut surface at a height of 0.05 $3\mu$m + the bearing height of each first projection within the observation region (region of 109×145 $\mu$m) using the aforementioned image processing software, and dividing a sum of the areas by an area of the observation region.

The density of the first projection was obtained by counting a number of the first projections within the observation region (region of 109x145 $\mu$m) using the aforementioned image processing software, and dividing the number by the area of the observation region.

(Evaluation of finger sliding property of non-transparent film)

An evaluation of the finger sliding property was performed by applying a finger to a surface of a non-transparent film of each transparent substrate with non-transparent film, and sliding the finger.

As a result of evaluation, the non-transparent film determined not to have a sticking feeling was denoted by a symbol "○", the non-transparent film determined to slightly have a sticking feeling was denoted by "Δ", and the non-transparent film determined to have an uncomfortable sticking feeling in sliding fingers was denoted by "X".

Results of the respective evaluations will be shown in TABLE 4 as a whole.

[TABLE 4]

| | | first projections | | | | second projections | | results of evaluation | | |
|---|---|---|---|---|---|---|---|---|---|---|
| | | max height (μm) | standard deviation of height (μm) | area ratio (%) | density (/ μm²) | average height (μm) | desity (/ μm²) | haze (%) | clarity | finger sliding property |
| 11th Ex | | 11.9 | 2.7 | 41.8 | 0.00055 | 2.9 | 0.00183 | 88.2 | 0.06 | ○ |
| 12th Ex | | 15.6 | 7.2 | 62.8 | 0.00044 | 4.2 | 0.00186 | 80.1 | 0.15 | ○ |
| 13th Ex | | 26.0 | 11.5 | 58.0 | 0.00033 | 4.3 | 0.00231 | 88.9 | 0.10 | X |
| 14th Ex | | 30.2 | 13.2 | 67.2 | 0.00017 | 5.4 | 0.00040 | 92.3 | 0.09 | X |

From the results shown above, it was found that, in the transparent substrates with non-transparent film of the eleventh Example and twelfth Example, the standard deviation of heights of the first projections fall much below 10 μm, the area ratios are 65% or less, and the densities exceed 0.0003 /μm². Furthermore, the finger sliding properties of the non-transparent film were found to be excellent.

In contrast, it was found that, in the transparent substrate with non-transparent film of the fourteenth Example, the standard deviation of heights of the first projections exceeds 10 μm, the area ratio exceeds 65%, and the density fell below 0.0003 /μm². Furthermore, the finger sliding property of the non-transparent film was found to be unfavorable.

Moreover, it was found that, also in the transparent substrate with non-transparent film of the thirteenth Example, that corresponds to the practical example of the present invention, the standard deviation of heights of the first projections exceeded 10 μm, and the finger sliding property of the non-transparent film was found to be unfavorable.

In this way, it was confirmed that in a transparent substrate with non-transparent film, when a standard deviation of heights of first projections is 10 μm or less, a finger sliding property of the non-transparent film was enhanced.

The present application is based on and claims the benefit of priority of Japanese Priority Application No. 2016-009191 filed on January 20, 2016, the entire contents of which are hereby incorporated by reference.

REFERENCE SIGNS LIST

| | |
|---|---|
| 1 | transparent substrate with non-transparent film |
| 3 | transparent substrate |
| 5 | non-transparent film |
| 5a | first projection |
| 5b | second projection |
| 10 | electrostatic coating apparatus |
| 11 | coating booth |
| 12 | chain conveyer |
| 13 | high voltage cable |
| 14 | supply line for coating composition |
| 15 | recovery line for coating composition |
| 16a,16b | air supply line |
| 17 | electrostatic coating gun |
| 18 | high voltage generating apparatus |
| 19 | exhaust duct |
| 20 | exhaust box |
| 21 | electrically conductive substrate |
| 30 | gun main body |
| 31 | coating material supply tube |
| 32 | rotating shaft |
| 33 | outlet |

35      air supply path
40      rotary atomizing head
41      first member
42      second member
43      shaft attaching portion
44      holding portion
45      peripheral wall
46      guide plane
47      expanding portion
48      diffusing surface
49      front wall
50      emission hole
51      tubular portion
S       storage room

**Claims**

1.  A transparent substrate with non-transparent film comprising:

    a transparent substrate; and
    a non-transparent film formed on the transparent substrate,
    wherein the non-transparent film includes
    first projections, each having a diameter (as calculated as an exact circle) of greater than 10 $\mu$m, in a cross section, at a height of 0.05 $\mu$m plus a bearing height of a surface shape obtained by measuring a region of (101 $\mu$m to 111 $\mu$m) $\times$ (135 $\mu$m to 148 $\mu$m) by using a laser microscope; and
    second projections, each having a diameter (as calculated as an exact circle) of 1 $\mu$m or more and 10 $\mu$m or less, in a cross section, at a height of 0.5 $\mu$m plus the bearing height of the surface shape,
    wherein a maximum height of each of the first projections, with reference to a height at a lowest part in the region, is 8.0 $\mu$m or more and 30.0 $\mu$m or less, and
    wherein a number of the second projections is 0.001 or more and 0.05 or less per 1 $\mu$m$^2$, and an average height of the second projections, with reference to the bearing height, is 1.50 $\mu$m or more and 5.00 $\mu$m or less.

2.  The transparent substrate with non-transparent film according to claim 1,
    wherein a clarity is 0.25 or less.

3.  The transparent substrate with non-transparent film according to claim 1 or 2,
    wherein a haze is 70% or more.

4.  The transparent substrate with non-transparent film according to any one of claims 1 to 3,
    wherein the non-transparent film includes silica in an amount of 90 wt% or more.

5.  The transparent substrate with non-transparent film according to any one of claims 1 to 4,
    wherein a standard deviation of the maximum heights of the first projections is 10 $\mu$m or less.

6.  The transparent substrate with non-transparent film according to claim 5,
    wherein a sum of areas of the cross sections of the first projections at the height of 0.05 $\mu$m plus the bearing height is 65% of an area of the region or less.

7.  The transparent substrate with non-transparent film according to claim 5 or 6,
    wherein a number of the first projections is 0.00030 or more and 0.76 or less per 1 $\mu$m$^2$.

# FIG.1

# FIG.2

# FIG.3

# FIG.4

# FIG.5

# FIG.6

# FIG.7

200 mm

ILLUSTRATION SHEET

TRANSPARENT BASE
MATERIAL WITH FILM

VISUAL
OBSERVATION

## INTERNATIONAL SEARCH REPORT

International application No.

PCT/JP2016/085231

### A. CLASSIFICATION OF SUBJECT MATTER
*C03C17/23*(2006.01)i

According to International Patent Classification (IPC) or to both national classification and IPC

### B. FIELDS SEARCHED

Minimum documentation searched (classification system followed by classification symbols)
C03C15/00-23/00, C08J7/04-7/06, B32B1/00-43/00, B05D1/00-7/26

Documentation searched other than minimum documentation to the extent that such documents are included in the fields searched
Jitsuyo Shinan Koho          1922-1996   Jitsuyo Shinan Toroku Koho   1996-2017
Kokai Jitsuyo Shinan Koho    1971-2017   Toroku Jitsuyo Shinan Koho   1994-2017

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2002-201043 A (Nippon Sheet Glass Co., Ltd.), 16 July 2002 (16.07.2002), claim 1; paragraphs [0001], [0020] to [0021] (Family: none) | 1-7 |
| A | JP 2009-061686 A (Teijin DuPont Films Japan Ltd.), 26 March 2009 (26.03.2009), claim 1; paragraphs [0015], [0041]; examples (Family: none) | 1-7 |
| A | JP 2005-234554 A (Fuji Photo Film Co., Ltd.), 02 September 2005 (02.09.2005), claim 1 (Family: none) | 1-7 |

☐ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 11 January 2017 (11.01.17) | 24 January 2017 (24.01.17) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
|---|---|

Form PCT/ISA/210 (second sheet) (January 2015)

## REFERENCES CITED IN THE DESCRIPTION

**Patent documents cited in the description**

- JP 2012166994 A
- JP HEI10130537 B
- JP 2014094845 A
- JP 4063464 B
- JP 2016009191 A